(19) Europäisches Patentamt

European Patent Office

Office européen des brevets

(11) **EP 3 427 004 B1**

(12) # EUROPÄISCHE PATENTSCHRIFT

(45) Veröffentlichungstag und Bekanntmachung des Hinweises auf die Patenterteilung:
**26.01.2022 Patentblatt 2022/04**

(21) Anmeldenummer: **17718811.7**

(22) Anmeldetag: **08.03.2017**

(51) Internationale Patentklassifikation (IPC):
***G01B 11/06*** (2006.01)

(52) Gemeinsame Patentklassifikation (CPC):
**G01B 11/0625; G01B 11/0691**

(86) Internationale Anmeldenummer:
**PCT/DE2017/100180**

(87) Internationale Veröffentlichungsnummer:
**WO 2017/152911 (14.09.2017 Gazette 2017/37)**

(54) **VERFAHREN UND MESSVORRICHTUNG ZUM ERMITTELN EINER SCHICHTDICKE EINER KUNSTSTOFF-FOLIE**

METHOD AND MEASURING DEVICE FOR DETERMINING A LAYER THICKNESS OF A PLASTIC FILM

PROCÉDÉ ET DISPOSITIF DE MESURE POUR DÉTERMINER UNE ÉPAISSEUR DE COUCHE D'UNE FEUILLE EN PLASTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.03.2016 DE 102016104145**

(43) Veröffentlichungstag der Anmeldung:
**16.01.2019 Patentblatt 2019/03**

(73) Patentinhaber: **iNOEX GmbH Innovationen und Ausrüstungen
für die Extrusionstechnik
49324 Melle (DE)**

(72) Erfinder:
• **PETERMANN, Jan Hendrik
49328 Melle (DE)**
• **NERLING, Christoph
31737 Rinteln (DE)**

(74) Vertreter: **Bremer, Ulrich
Advopat
Patent- und Rechtsanwälte
Theaterstraße 6
30159 Hannover (DE)**

(56) Entgegenhaltungen:
**EP-A1- 2 899 497**

• **STANZE DENNIS ET AL: "Multilayer Thickness Determination Using Continuous Wave THz Spectroscopy", IEEE TRANSACTIONS ON TERAHERTZ SCIENCE AND TECHNOLOGY, IEEE, PISCATAWAY, NJ, USA, Bd. 4, Nr. 6, 6. November 2014 (2014-11-06), Seiten 696-701, XP011563146, ISSN: 2156-342X, DOI: 10.1109/TTHZ.2014.2348414 [gefunden am 2014-10-30]**
• **M THEUER ET AL: "Sensitivity increase for coating thickness determination using THz waveguides References and links", OPTICS EXPRESS, Bd. 18, Nr. 11, 14. Mai 2010 (2010-05-14), Seiten 11456-11463, XP55376187,**

**Beschreibung**

Die Erfindung betrifft ein Verfahren und eine Messvorrichtung zum Ermitteln einer Schichtdicke einer Kunststoff-Folie.

Zur Vermessung von Produkten aus Kunststoff-Materialien sind Terahertz-Messungen bekannt. Kunststoff-Material ist für Terahertz-Strahlung grundsätzlich durchlässig, weist jedoch gegenüber Luft oder Vakuum einen höheren Brechungsindex von etwa n=1,5 auf. Hierdurch sind vielfältige Messungen möglich.

In der Time-Domain Terahertz-Spektroskopie wird ein multifrequenter Terahertzimpuls über eine Emitterantenne emittiert. Trifft der Impuls zum Beispiel auf ein Kunststoffrohr, so findet an der Vorder-und Rückseite der Rohrwand jeweils eine Teilreflektion des Impulses gemäß der Fresnelschen Formeln statt. Die teilreflektierten Impulse werden von einer Detektorantenne in einer Empfangseinrichtung detektiert. Durch den Zeitunterschied bzw. die Laufzeit der Terahertz-Strahlung kann somit eine Wandstärke oder Schichtdicke berechnet werden, z. B. von Kunststofffolien und Kunststoff-Platten. Bei kleineren Schichtdicken von zum Beispiel unterhalb 200 μm werden in die Laufzeitunterschiede der Impulse jedoch sehr gering, so dass sich die Impulse zeitig überlappen und die Messungen daher schwierig sind.

Weiterhin sind Messungen im Frequenzbereich bzw. Betrachtungen des Frequenzspektrums des empfangenen Terahertz-Signals bekannt. Hierbei kann die Kunststofffolie oder ein Kunststoff-Produkt zum Beispiel frei an einer Terahertz-Sende- und Empfangseinrichtung vorbei geführt und in einem Frequenzbereich vermessen werden, wobei an der Oberseite der Kunststofffolie, das heißt beim Eintritt der Terahertz-Strahlung von der umgebenen Luft in das Kunststoff-Material, und an der Unterseite der Kunststofffolie, das heißt dem Übergang von dem Kunststoffmaterial in die umgebene Luft, Teilreflektionen auftreten, wobei die Reflektionsanteile nachfolgend überlagern und interferieren. Auch die Auflösung derartiger Messungen im Frequenzbereich ist jedoch begrenzt.

Aus Stanze Dennis et al: "Multilayer Thickness Determination Using Continuous Wave THz Spectroscopy", IEEE TRANSACTIONS ON TERAHERTZ SCIENCE AND TECHNOLOGY, IEEE, PISCATAWAY, NJ, USA, Bd. 4, Nr. 6, 6. November 2014, S. 696-701, ISSN: 2156-342X, ist ein Verfahren zur Messung der Dicke eines Vielschicht-Systems auf Basis von optoelektronischer Continious-Wave-THz-Spectroscopy bekannt. Hierbei können eine hohe Frequenzauflösung und schnelle Datenerfassung in kurzer Messzeit erreicht werden. Es wird unter anderem eine Schicht aus PTFE auf eine Schicht aus POM (Polyoxymethylen) gelegt und vermessen, wobei diese Schichten ergänzend einzeln mit einem THz-Spektrometer in Transmissions-Geometrie vermessen werden, um die Schichtdicke zu vermessen.

Die EP 2 899 497 A1 beschreibt ein Sensorsystem und ein Verfahren zum Erfassen einer Schicht frischer Farbe, wobei THz-Strahlung von einem Emitter-System ausgegeben und von einem frisch gestrichenen Körper reflektiert wird. Die von dem frisch gestrichenen Körper reflektierte THz-Strahlung wird von einem Detektorsystem detektiert, woraufhin Schicht-Parameter einschließlich die voraussichtliche Dicke der getrockneten Schicht, aus Modelparametern ermittelt werden können.

Aus M. Theuer et al: "Sensitivity increase for coating thickness determination using THz waveguides", OPTICS EXPRESS, Bd. 18, Nr. 11, 14. Mai 2010, Seiten 11456-11463, XP55376187, wird eine Schichtdickenbestimmung bis zu Schichtdicken von 2,5 Mikrometern mittels Terahertz-Wellenführungs-Spektroskopie beschrieben. Im Vergleich zu typischen Single-Path-Transmissions-Messungen im Time-Domain-Verfahren wird die effektive Terahertz-Puls-Verzögerung für eine bestimmte Schichtdicke beträchtlich vergrößert, wodurch die Sensitivität deutlich erhöht werden kann, so dass auch direkte Messungen von Schichtdicken bis zu Hundertsteln einer THz-Wellenlänge möglich sind.

Der Erfindung liegt die Aufgabe zugrunde, ein Verfahren und eine Messvorrichtung zum Messen einer Schichtdicke einer Kunststoff-Folie zu schaffen, die eine sichere Vermessung mit geringem apparativen Aufwand ermöglichen.

Diese Aufgabe wird durch ein Verfahren nach Anspruch 1 und einer Messvorrichtung nach Anspruch 10 gelöst. Die Unteransprüche beschreiben bevorzugte Weiterbildungen.

Die Messvorrichtung kann insbesondere zur Durchführung des Verfahrens eingesetzt werden; weiterhin kann das Verfahren insbesondere unter Einsatz der Messvorrichtung erfolgen.

Vorzugsweise wird die Kunststoff-Folie in mehreren Frequenzen, insbesondere einem Frequenzraum oder Frequenzbereich vermessen. Die KunststoffFolie wird somit auf einem Untergrund, und zwar einer rotierenden Walze oder Rolle, aus einem Material geführt, das für die Terahertz-Strahlung einen höheren zweiten Brechungsindex als der erste Brechungsindex der Kunststoff-Folie aufweist. Zu ihrer Oberseite liegt die Kunststoff-Folie in einem Medium mit geringerem dritten Brechungsindex, insbesondere Luft.

Die Kunststoff-Folie kann hierbei insbesondere auf die rotierende Rolle gespannt werden; hierdurch wird der Einschluss von Luft bzw. Gas zwischen der Kunststoff-Folie und dem Untergrund effektiv verhindert.

Der Erfindung liegt der Gedanke zugrunde, dass bei einer Messung, bei der Terahertz-Strahlung von einem umgebenen Medium mit geringerem Brechungsindex wie Luft, Gas oder Vakuum zunächst auf die Kunststoff-Folie und nachfolgend den Untergrund mit höherem Brechungsindex auftrifft, ein Interferenz-System ausgebildet wird, das eine hohe Auflösung bzw. Messung einer geringeren Schichtdicke ermöglicht, insbesondere auch eine höhere Auflösung als eine Messung an einer freitragenden Folie, die in Luft geführt wird.

Erfindungsgemäß wird vorzugsweise eine Geometrie ausgebildet, die eine Schichtdickenmessung durch Auslöschung bzw. destruktive Interferenz von Teilreflektionen oder Reflektionsanteilen an einer Oberseite und Unterseite der Kunststofffolie ermöglicht.

So erfolgt an der Oberseite der Kunststoff-Folie eine Teilreflektion bei Eintritt der Terahertz-Strahlung von dem Medium (Luft) mit geringerem dritten Brechungsindex in das Medium mit höheren ersten Brechungsindex (KunststoffMaterial); an der Unterseite der Kunststoff-Folie erfolgt nunmehr jedoch ein erneuter Übergang von einem Medium mit kleinerem ersten Brechungsindex zu einem Medium mit größerem zweiten Brechungsindex. Hierdurch wird eine Interferenz-Ausbildung mit einer Verbesserung der Auflösung um einen Faktor 2 gegenüber einer Vermessung einer freitragenden Kunststoff-Folie ermöglicht

Somit können ohne relevanten apparativen Mehraufwand bei einer gleichen Frequenz der verwendeten Terahertz-Strahlung deutlich kleinere Foliendicken ermittelt werden.

So kann z. B. ein Material eingesetzt werden kann, das im Terahertz-Frequenzbereich einen Brechungsindex von zum Beispiel n=2,2 oder n=3 aufweist. Hierdurch sind somit hohe Intensitäten der Reflektions-Anteile bzw. Teilreflektionen, und somit eine wirksame Auslöschung bzw. destruktive Interferenz verschiedenen Reflektions-Anteile an den Grenzschichten möglich.

Vorteilhafterweise wird die Kunststoff-Folie über zum Beispiel zwei SpannRollen auf die Träger-Rolle gespannt; um störende Lufteinflüsse zu vermeiden. Hierdurch wird ein vorzugsweise senkrechter Einfall der Terahertz-Strahlung auf die Kunststoff-Folie im Bereich der Träger-Rolle nicht beeinträchtigt.

Die Messung kann insbesondere im Anschluss an die Herstellung der Kunststoff-Folie erfolgen, zum Beispiel durch Positionierung der Vorrichtung nach einem Extruder.

Grundsätzlich ist keine Messung eines vollständigen Frequenzbereiches erforderlich; so können zum Beispiel auch Vergleiche der Intensitäten bei einigen relevanten Frequenzen durchgeführt werden.

Die Terahertz-Strahlung kann insbesondere in einem Frequenzbereich von 0,01 THz bis 50 THz, insbesondere 0,01 THz bis 20 THz, zum Beispiel 0,01 THz bis 10 THz oder auch 0,05 THz bis 10THZ eingestrahlt werden. Somit kann als Terahertz-Strahlung elektromagnetische Strahlung im Radarbereich, Mikrowellenbereich oder Terahertz-Bereich eingesetzt werden. Sie kann insbesondere als gepulste Strahlung oder alternativ hierzu auch z. B. als frequenzmodulierte Strahlung eingestrahlt werden. Die Terahertz-Strahlung kann insbesondere vollelektronisch erzeugt werden mit einem Sende-Dipol und einem Empfangs-Dipol, die auch kombiniert, z. B. als THZ-Transceiver, ausgebildet sein können.

Die Erfindung wird im Folgenden anhand der beiliegenden Zeichnungen an einigen Ausführungsformen näher erläutert. Es zeigen:

Fig. 1        eine Messvorrichtung zum Ermitteln einer Dicke einer Kunststofffolie;

Fig. 2        den Detailausschnitt II aus Figur 1;

Fig. 3        ein Diagramm zur Veranschaulichung des Phasenverlaufs einer Terahertz-Strahlung bei Durchqueren einer freistehenden Folie;

Fig. 4        ein der Figur 3 entsprechendes Diagramm zur Veranschaulichung des Phasenverlaufs der Terahertz-Strahlung bei der Anordnung aus Figur 1 und 2;

Fig. 5a)      Terahertz-Messungen im Frequenzbereich einer doppellagigen Klebefolie - a1) freistehend in Luft gemäß Fig. 3, und - a2) auf einem Material gemäß Fig. 4;

Fig. 5b)      Terahertz-Messungen im Frequenzbereich einer einfachen Folie - b1) freistehend in Luft gemäß Fig. 3, und - b2) auf einem Material gemäß Fig. 4.

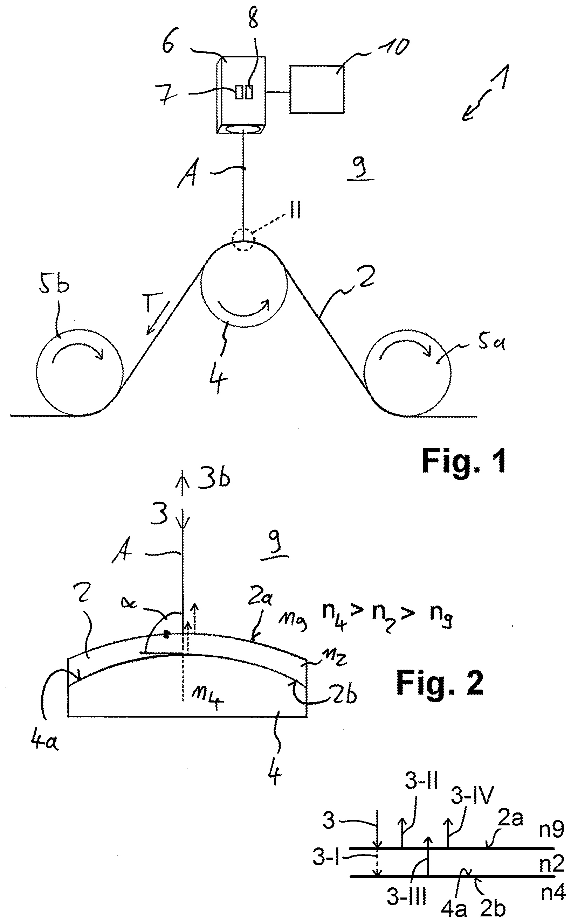

Eine Messvorrichtung 1 zur Ermittlung einer Foliendicke d einer KunststoffFolie 2 weist gemäß Figur 1 eine Träger-Rolle 4, zwei Spann-Rollen 5a und 5b, sowie eine Terahertz-Sende- und Empfangseinrichtung 6 und eine Auswerteeinrichtung 10 auf. Die Terahertz-Sende- und Empfangseinrichtung 6 weist wiederum einen Terahertz-Sender 7, z. B. eine Emitterantenne, und einen Terahertz-Empfänger 8, z. B. eine Detektorantenne auf, die auf einer gemeinsamen optischen Achse A angeordnet Terahertz-Strahlung 3 aussenden und empfangen. Der Terahertz-Sender 7 und der Terahertz-Empfänger 8 können entweder dicht benachbart an bzw. auf der optischen Achse A angeordnet sein, oder über geeignete optische Mittel, zum Beispiel über Spiegel oder Linsen, der selben optischen Achse A zugeordnet sein.

Der Terahertz-Sender 7 gibt breitbandige (multifrequente) Terahertz- Strahlung 3 aus. Die ausgesandte Terahertz-Strahlung 3 fällt entlang der optischen Achse A lotrecht bzw. senkrecht, das heißt unter einem Winkel a=90° auf die Kunststoff-Folie 2 auf, die auf die Träger-Rolle 4 gespannt ist.

Die Kunststoff-Folie 2 wird zum Beispiel direkt nach ihrer Herstellung vermessen. Die Kunststoff-Folie 2 wird über die erste Spann-Rolle 5a zu der Träger-Rolle 4 und von dieser wiederum über die zweite Spann-Rolle 5b in der gezeigten Transportrichtung T geführt. Hierdurch wird die Kunststoff-Folie 2 auf der Oberfläche 4a der Träger-Rolle 4 gespannt; die Kunststoff-Folie 2 ist somit gemäß Figur 1 und insbesondere der Detail-Darstellung der Figur 2 mit ihrer Oberseite 2a der Umgebung, das heißt Luft 9 (oder allgemein einem Gas) ausgesetzt; ihre Unterseite 2b liegt direkt auf der Oberfläche 4a der Träger-Rolle 4 auf, das heißt insbesondere ohne eine dazwischen ausgebildete Luft-Schicht. Die Träger-Rolle 4 kann hierbei einen eigenen Antrieb aufweisen, oder auch passiv mit Rollen.

Das Kunststoff-Material der Kunstsoff-Folie 2 weist in dem Terahertz-Frequenzbereich einen ersten Brechungsindex n2 von zum Beispiel etwa n2= 1,5 auf. Die umgebene Luft 9 weist einen dritten Brechungsindex n9 = 1 (etwa wie Vakuum) auf. Die Träger-Rolle 4 ist aus einem Material mit einem zweiten Brechungsindex n4 > n2 ausgebildet, z. B. mit n4 größer als 2, zum Beispiel n4=2,2 oder n4= 3.

Somit erfolgt an den Grenzflächen gemäß Figur 2 eine teilweise Reflektion und Transmission wie folgt: Die einfallende Terahertz-Strahlung 3 erfährt an der Oberseite 2a der Kunststoff-Folie 2 eine Brechung an einem Medium mit anderem Brechungsindex (n2 ≠ n9), hier einem optisch dichteren Medium, d.h. n2 > n9. Ein erster Transmissions-Anteil 3-I gelangt durch die Grenzfläche bzw. Oberseite 2a in die Kunststoff-Folie 2, ein erster Reflektions-Anteil 3-II wird an der Oberseite 2a reflektiert, was bei einer Grenzfläche zu einem optisch dichteren Medium mit einer Phasenverschiebung von 180° erfolgt (Brechung an einem Medium mit höherem Brechungsindex bzw. optisch dichterem Medium).

Der erste Transmissions-Anteil 3-I gelangt nachfolgend zu der Grenzfläche zwischen der Unterseite 2b der Kunststoff-Folie 2 und der Oberfläche 4a der Träger-Rolle 4, das heißt wiederum zu einem Grenzübergang in ein Medium mit höherem Brechungsindex n4, n4 > n2.

Somit wird ein zweiter Reflektions -Anteil 3-III an diesem zweiten Grenzübergang wiederum mit einer Phasenverschiebung von 180° reflektiert gelangt durch die Kunststoff-Folie mit Schichtdicke d und tritt als zweiter Transmissions-Anteil 3-IV (ohne Phasensprung) aus der Oberfläche 2a aus. Der erste Reflektions-Anteil 3-II und zweite Transmissions-Anteil 3-IV überlagern sich bzw. interferieren und bilden die reflektierte Terahertz-Strahlung 3b. Weitergehende Mehrfach-Reflektionen werden hierbei zunächst nicht betrachtet, da ihr Anteil sukzessive abnimmt.

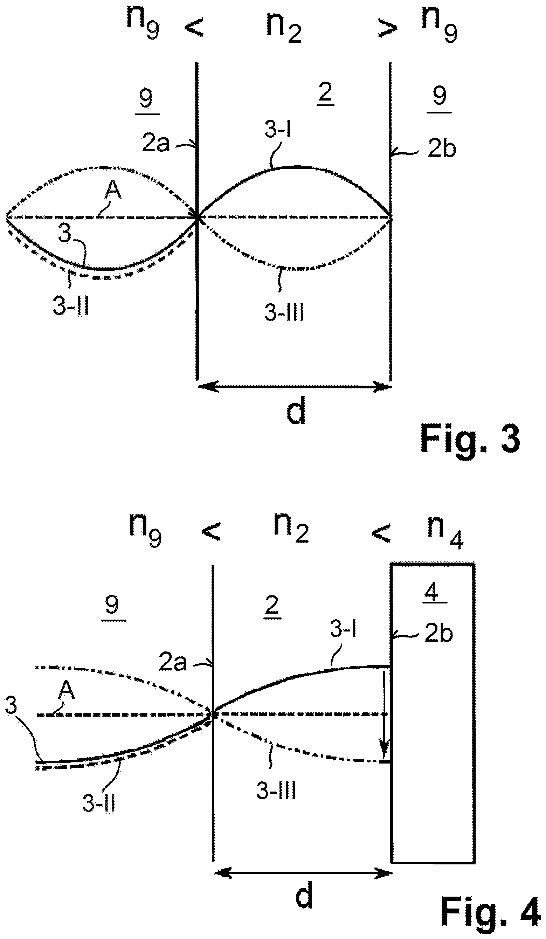

Figur 3 und 4 zeigen das Messprinzip einer Schichtdickenbestimmung durch Auslöschung der Anteile 3-II und 3-IV, d.h. destruktive Interferenz: Fig. 3 zeigt zunächst eine Terahertz-Messung einer Kunststoff-Folie 2, die beidseitig bzw. freitragend in Luft 9 angeordnet ist. Gemäß Figur 3 findet eine negative Interferenz mit teilweiser Auslöschung der Anteile 3-II und 3-IV bei folgender Bedingung statt:

$$\lambda = 2 \times n_2 \times d \quad (Gl1),$$

mit λ= Wellenlänge der Terahertz-Strahlung 3 in Luft, n2= Brechungsindex der Kunststoff-Folie 2 und d = Schichtdicke der Kunststoff-Folie 2.

Figur 3 ermöglicht somit Schichtdicken-Messungen an der freien Luft, wobei die messbare Schichtdicke d nach unten durch die Wellenlänge λ beschränkt ist, d.h. bezüglich der Frequenz erfolgt eine Beschränkung der Schichtdicke durch die Frequenz f nach oben. Gerade die Erzeugung von Terahertz-Strahlung 3 mit kleinen Wellenlängen bzw. hohen Frequenzen, auch optische Strahlung genannt, ist jedoch problematisch, da die Ausbildung und Ansteuerung der Antennen den Frequenzbereich nach oben beschränken. Die Messung nach Fig. 3 kann daher erfindungsgemäß gegebenenfalls ergänzend durchgeführt werden, z. B. neben der Träger-Rolle 4 an der freien Luft 9.

Gemäß Fig. 1 und 2 erfolgt eine Terahertz-Messung hingegen in einer Geometrie bzw. Position, bei der die Kunststoff-Folie 2 auf einer Unterlage, z. B. der Träger-Rolle 4 liegt, die einen größeren zweiten Brechungsindex n4 als der erste Brechungsindex n2 der zu messende Kunststoff-Folie 2 aufweist.

Gemäß Figur 4 findet eine negative Interferenz mit teilweiser Auslöschung der Anteile 3-II und 3-IV bei folgender Bedingung statt:

$$\lambda = 4 \times n_2 \times d \quad (Gl2).$$

Hierbei ist relevant, dass gemäß Figur 4 - anders als in Fig. 3 - an der zweiten Grenzfläche, das heißt beim Übergang der Unterseite 2b der KunststoffFolie 2 zu der Oberfläche 4a mit größerem Brechungsindex n4 > n2, ein Phasensprung um 180° auftritt.

Somit kann eine Auslöschung bzw. destruktive Interferenz bei einer Schichtdicke d erreicht werden, die bei gleicher Frequenz f gegenüber der Messung der Fig. 3 um den Faktor 2 kleiner ist. Es können somit gegenüber Fig. 3 halb so dicke Kunststoff-Folien 2 vermessen werden.

Hierbei wird erkannt, dass für eine derartige Bedingung ein möglicher Lufteinschluss zwischen der Kunststoff-Folie 2 und der Träger-Rolle 4 zu vermeiden ist.

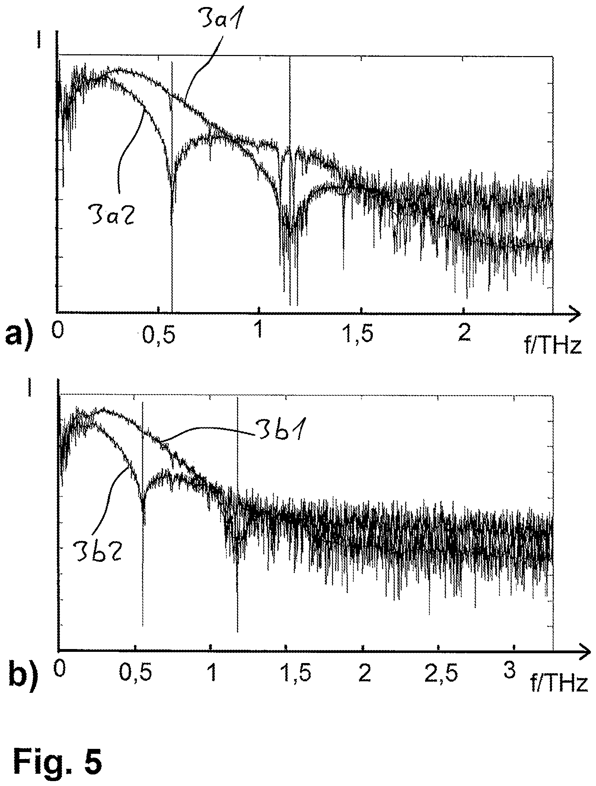

Die Messdiagramme der Figur 5 zeigen derartige Messungen;

In Figur 5a stellt die Kurve a1 die Messung einer doppellagigen Kunststoffschicht, insbesondere eines doppellagigen Kunststoff-Klebebandes, freistehend in der Luft gemäß Figur 3 dar, die Kurve a2 hingegen eine Messung der gleichen Folie entsprechend Fig. 4 auf einer Träger-Rolle 4 aus einem Material mit n4=2,2.

Figur 5b zeigt eine Messung einer einzelnen Kunststoff-Folie 2 gemäß den gezeigten Ausführungsformen, bei Kurve b1 wiederum der freitragenden Kunststoff-Folie 2 in Luft gemäß Figur 3, und der Kurve b2 bei einer Vermessung entsprechend Figur 4, das heißt einem Aufbau gemäß Figur 1 und 2. Es zeigt sich somit, dass bei einer gegebenen Messfrequenz f halb so große Schichtdicken d detektiert werden können.

Die Messungen nach Fig. 5a) und b) erfolgen über einen breitbandigen Frequenzbereich f; für eine Kontrollmessung, ob eine vorgegebene Schichtdicke d eingehalten wird, ist entsprechend lediglich ein kleinerer Frequenzbereich erforderlich; es kann auch ein Vergleich einzelner Frequenzen f ausgewählt werden.

Gemäß Figur 1 ist die Sende-und Empfangseinrichtung 6 mit einer Auswerteeinrichtung 10 verbunden, die die Sende- und Empfangseinrichtung 6 ansteuert und die Messsignale auswertet, und gegebenenfalls bei Erkennen eines Fehlers, d.h. z. B. einer Abweichung der ermittelten Schichtdicke von einem Sollbereich d_soll, ein Fehlersignal ausgibt.

Fig. 1 kann grundsätzlich dahingehend abgewandelt werden, dass die Terahertz-Strahlung 3 von oben zunächst ein anderes Medium durchläuft als Luft 9, wenn dieses andere Medium einen kleineren Brechungsindex als die Kunststoff-Folie 2 aufweist, z. B. eine obere Rolle mit kleinem Brechungsindex. Grundsätzlich kann auch die untere Träger-Rolle 4 einen geringeren Brechungsindex als die Kunststoff-Folie 2 aufweisen, wenn dann von oben eine Rolle mit größerem Brechungsindex auf der Kunststoff-Folie 2 aufliegt. Relevant für Gleichung Gl2 ist zunächst, dass die Kunststoff-Folie 2 bei der Vermessung zwischen zwei Medien mit zum einen größerem Brechungsindex und zum anderen kleineren Brechungsindex liegt bzw. geführt ist. Ausbildungen mit einer oberen Rolle, durch die Terahertz-Strahlung 3 geleitet wird, sind jedoch aufwändiger.

## Patentansprüche

1. Verfahren zum Ermitteln einer Schichtdicke (d) einer Kunststoff-Folie (2), mit mindestens folgenden Schritten:

    Führen der Kunststoff-Folie (2) mit einem ersten Terahertz-Brechungsindex (n2) auf einer Unterlage (4), die einen zweiten Terahertz-Brechungsindex (n4) aufweist, der höher als der erste Terahertz- Brechungsindex (n2) ist,
    Einstrahlen einer Terahertz-Strahlung (3) durch ein Umgebungsmedium (9) mit einem dritten Terahertz-Brechungsindex (n9) auf eine Oberseite (2a) der Kunststoff-Folie (2) im Bereich ihrer Auflage auf der Unterlage (4), wobei der dritte Terahertz-Brechungsindex (n9) geringer als der erste Terahertz- Brechungsindex (n2) ist,
    Messen der Intensität (I) einer von der Oberseite (2a) der Kunststoff-Folie (2) reflektierten Terahertz-Strahlung (3b),
    Ermittlung der Schichtdicke (d) der Kunststoff-Folie (2) aus der gemessenen Intensität der reflektierten Terahertz-Strahlung (3b),
    **dadurch gekennzeichnet, dass**
    die reflektierte Terahertz-Strahlung (3b) in einem Frequenzbereich gemessen wird, in dem folgende Interferenzbedingungen für die Auslöschung zumindest teilweise erfüllt ist:

$$\lambda = 4 \times n_2 \times d \quad ( Gl2),$$

mit $\lambda$= Wellenlänge der Terahertz-Strahlung in Luft, $n_2$= Brechungsindex der Kunststoff-Folie und d = Schichtdicke der Kunststoff-Folie (2), und der Untergrund eine sich drehende Rolle (4) oder Walze ist, auf deren Oberfläche (4a) die Kunststoff-Folie (2) geführt wird.

2. Verfahren nach Anspruch 1, **dadurch gekennzeichnet, dass** die Terahertz-Strahlung (3a) in einem Bereich auf die Kunststoff-Folie (2) eingestrahlt wird, in dem die Kunststoff-Folie (2) direkt und ohne Gas-Einschlüsse auf dem Untergrund (4) aufliegt.

3. Verfahren nach einem der vorherigen Ansprüche, **dadurch gekennzeichnet, dass** die Kunststoff-Folie (2) auf den Untergrund (4) gespannt wird zur Vermeidung von Gas-Einschlüssen, zum Beispiel über eine vordere Spann-Rolle (5a) und eine hintere Spann-Rolle (5b).

4. Verfahren nach einem der vorherigen Ansprüche, **dadurch gekennzeichnet, dass** die Terahertz-Strahlung (3) in mehreren Frequenzen (f), z. B. einem Frequenzbereich, eingestrahlt wird und die Schichtdicke (d) der Kunststoff-Folie (2) ermittelt wird durch einen Vergleich der Intensitäten (I) der reflektierten Terahertz-Strahlung (3b) bei mehreren Frequenzen, insbesondere eine Messung und Auswertung im Frequenzbereich.

5. Verfahren nach einem der vorherigen Ansprüche, **dadurch gekennzeichnet, dass** die Schichtdicke (d) ermittelt wird als lokales Minimum der Intensität (I) der reflektierten Terahertz-Strahlung (3b).

6. Verfahren nach einem der vorherigen Ansprüche, **dadurch gekennzeichnet, dass** die reflektierte Terahertz-Strahlung (3b) in einem Frequenzbereich ermittelt wird, in dem ein von der Luft an einer Grenzfläche, nämlich der Oberseite (2a) der Kunststoff-Folie (2) reflektierter erster Reflektions-Anteil (3-II) sich zumindest teilweise durch Interferenz auslöscht oder verringert mit einem an einer zweiten Grenzfläche zwischen der Unterseite (2b) der Kunststoff-Folie (2) und einer Oberfläche (4a) des Untergrundes (4) reflektieren zweiten Reflektions-Anteil (3-III) oder einem aus dem zweiten Reflektions-Anteil (3-III) bei Durchtritt durch die Oberseite (2a) folgenden zweiten Transmissions-Anteil (3-IV).

7. Verfahren nach einem der vorherigen Ansprüche, **dadurch gekennzeichnet, dass** die ausgegebene Terahertz-Strahlung (3a) im Wesentlichen rechtwinklig auf die Kunststoff-Folie (2) und den Untergrund (4) eingestrahlt wird.

8.  Verfahren nach einem der vorherigen Ansprüche, **dadurch gekennzeichnet, dass** Terahertz-Strahlung (3a) in einem Frequenzbereich von 0,01 THz bis 50 THz, insbesondere 0,01 THz bis 20 THz, zum Beispiel 0,01 THz bis 10 THz eingestrahlt wird, insbesondere als gepulste Strahlung.

9.  Verfahren nach einem der vorherigen Ansprüche, **dadurch gekennzeichnet, dass** die Kunststoff-Folie (2) direkt nach einer Herstellung, zum Beispiel einer Extrusion, vermessen wird.

10. Messvorrichtung (1) zum Ermitteln einer Schichtdicke (d) einer KunststoffFolie (2), wobei die Messvorrichtung (1) mindestens aufweist:

     einen Untergrund (4) zum Führen der Kunststoff-Folie (2),
     eine Terahertz-Sende- und Empfangseinrichtung (6) mit einem Terahertz-Sender (7) zum Aussenden von Terahertz-Strahlung (3) auf die Kunststoff-Folie (2) im Bereich ihrer Auflage auf dem Untergrund (4) und
     einem Terahertz-Empfänger (8) zum Empfangen von der Kunststoff-Folie (2) reflektierter Terahertz-Strahlung (3b), und
     eine Auswerte-Einrichtung (10), die die Intensität (I) der reflektierten Terahertz-Strahlung (3b) auswertet und die Schichtdicke (d) ermittelt.
     wobei der Untergrund (4) in dem Terahertz-Frequenzbereich (F) einen höheren zweiten Terahertz-Brechungsindex (n4) als der erste Terahertz-Brechungsindex (n2) der Kunststoff-Folie (2) aufweist,
     **dadurch gekennzeichnet, dass**
     die Messvorrichtung (1) ausgelegt ist, die reflektierte Terahertz-Strahlung (3b) in einem Frequenzbereich zu messen, in dem folgende Interferenzbedingungen für die Auslöschung zumindest teilweise erfüllt ist:

$$\lambda = 4 \times n_2 \times d \quad (\text{Gl2}),$$

     mit λ= Wellenlänge der Terahertz-Strahlung in Luft, $n_2$= Brechungsindex der Kunststoff-Folie und d = Schichtdicke der Kunststoff-Folie (2), und
     der Untergrund (4) eine sich drehende Rolle (4) oder Walze ist zur Führung der Kunststoff-Folie (2).

11. Messvorrichtung (1) nach Anspruch 10, **dadurch**

**gekennzeichnet, dass** die sich drehende Rolle (4) oder Walze zur Führung der Kunststoff-Folie (2) ohne Lufteinschluss vorgesehen ist,
    wobei eine Spann- Einrichtung (5a, 5b) zum Spannen der Kunststoff-Folie (2) auf den Untergrund (4) vorgesehen ist.

12. Messvorrichtung (1) nach Anspruch 11, **dadurch gekennzeichnet, dass** die Spann- Einrichtung (5a, 5b) zwei Spannrollen (5a, 5b) aufweist.

13. Messvorrichtung (1) nach einem der Ansprüche 10 bis 12, **dadurch gekennzeichnet, dass** der Terahertz-Sender (7), z. B. eine Emitterantenne, die Terahertz-Strahlung (3) in mehreren Frequenzen (f), z. B. einem Frequenzbereich aussendet, und die Auswerte-Einrichtung (10) die Schichtdicke (d) durch einen Vergleich bei verschiedenen Frequenzen (f) ermittelt, z. B. als lokales Minimum der Intensität (I).

**Claims**

1.  Method for determining a layer thickness(d) of a plastic film (2), comprising at least the following steps:

     guiding the plastic film (2) with a first Terahertz refractive index (n2) on a base layer (4) having a second Terahertz refractive index (n4) that is greater than the first THz refractive index (n2), radiating a Terahertz radiation (3) through a surrounding medium (9) with a third Terahertz refractive index (n9) on a surface (2a) of the plastic film (2) in the region in which it is in contact with the base layer (4), wherein the third Terahertz refractive index (n9) is less than the first Terahertz refractive index (n2),
     measuring the intensity (I) of a Terahertz radiation (3b) reflected from the surface (2a) of the plastic film (2),
     determining the layer thickness (d) of the plastic film (2) from the measured intensity of the reflected THz radiation (3b),
     **characterised in that**
     the reflected Terahertz radiation (3b) is measured in a frequency range in which the following interference conditions for the cancellation are fulfilled at least in part:

$$\lambda = 4 \times n_2 \times d \quad (\text{Gl2}),$$

     where λ= wavelength of the Terahertz radiation in air,
     $n_2$= refraction index of the plastic film and
     d = layer thickness of the plastic film (2),
     and the underground is a rotating roller (4) or cylinder on the surface (4a) of which the plastic film (2) is guided.

2. Method according to claim 1, **characterised in that** the Terahertz radiation (3a) is radiated onto the plastic film (2) in a region in which the plastic film (2) is in contact with the underground (4) directly and without gas cavities.

3. Method according to one of the above claims, **characterised in that** the plastic film (2) is stretched on the underground (4) so as to avoid gas cavities, for example, using a front tensioning roller (5a) and a rear tensioning roller (5b).

4. Method according to one of the above claims, **characterised in that** the Terahertz radiation (3) is radiated multiple frequencies (f), e.g. a frequency range, and the layer thickness (d) of the plastic film (2) is determined by means of a comparison of the intensities (I) of the reflected Terahertz radiation (3b) at multiple frequencies, in particular a measurement and evaluation in the frequency range.

5. Method according to one of the above claims, **characterised in that** the layer thickness (d) is determined as a local minimum of the intensity (I) of the reflected Terahertz radiation (3b).

6. Method according to one of the above claims, **characterised in that** the reflected Terahertz radiation (3b) is determined in a frequency range in which a first reflection component (3-II) reflected by the air on a boundary surface, namely the surface (2a) of the plastic film (2) is cancelled out or reduced, at least partially, by interference with a second reflection component (3-III) reflected on a second boundary surface between the underside (2b) of the plastic film (2) and a surface (4a) of the underground (4) or a second transmission component (3-IV) following from the second reflection component (3-III) upon passing through the surface (2a).

7. Method according to one of the above claims, **characterised in that** the output Terahertz radiation (3a) is radiated essentially perpendicularly onto the plastic film (2) and the underground (4).

8. Method according to one of the above claims, **characterised in that** Terahertz radiation (3a) is radiated in a frequency range between 0.01 THz and 50 THz, in particular 0.01 THz and 20 THz, for example 0.01 THz and 10 THz, in particular as pulsed radiation.

9. Method according to one of the above claims, **characterised in that** the plastic film (2) is measured directly after being manufactured, for example extruded.

10. Measuring apparatus (1) for determining a layer thickness (d) of a plastic film (2), said measuring apparatus (1) comprising at least:

   an underground (4) for guiding the plastic film (2),
   a Terahertz transmitter and receiver device (6) including a Terahertz transmitter (7) for emitting Terahertz radiation (3) onto the plastic film (2) in the region in which it is in contact with the underground (4) and
   a Terahertz receiver (8) for receiving Terahertz radiation (3b) reflected from the plastic film (2), and
   an evaluation device (10) evaluating the intensity (I) of the reflected Terahertz radiation (3b) and determines the layer thickness (d).
   where the underground (4) has a higher second Terahertz refractive index (n4) in the Terahertz frequency range (F) than the first Terahertz refractive index (n2) of the plastic film (2),
   **characterised in that**
   the measuring apparatus (1) is configured to measure the reflected Terahertz radiation (3b) in a frequency range in which the following interference conditions for the cancellation are fulfilled at least in part:

$$\lambda = 4 \times n_2 \times d \quad (Gl2),$$

   where $\lambda$ = wavelength of the Terahertz radiation in air,
   $n_2$ = refractive index of the plastic film and
   d = layer thickness of the plastic film (2), and
   the underground (4) is a rotating roller (4) or cylinder for guiding the plastic film (2).

11. Measuring apparatus (1) according to claim 10, **characterised in that** the rotating roller (4) or cylinder for guiding the plastic film (2) is provided without gas cavities,
   whereby a tensioning device (5a, 5b) is provided for stretching the plastic film (2) on the underground (4).

12. Measuring apparatus (1) according to claim 11, **characterised in that** the tensioning device (5a, 5b) comprises two tensioning rollers (5a, 5b).

13. Measuring apparatus (1) according to one of the claims 10 through 12, **characterised in that** the Terahertz transmitter (7), e.g. an emitter antenna, emits the Terahertz radiation (3) in multiple frequencies (f), e.g. a frequency range, and the evaluation device (10) determines the layer thickness (d) by means of a comparison at multiple frequencies (f), e.g. as local minimum of the intensity (I).

**Revendications**

1. Procédé destiné à déterminer une épaisseur de couche (d) d'une feuille en plastique (2), le procédé comportant au moins les étapes suivantes :

   guidage de la feuille plastique (2) avec un premier indice de réfraction térahertz (n2) sur un support (4) qui présente un deuxième indice de réfraction térahertz (n4) qui est plus élevé que le premier indice de réfraction térahertz (n2), exposition à un rayonnement térahertz (3) à travers un milieu environnant (9) avec un troisième indice de réfraction térahertz (n9) sur une face supérieure (2a) de la feuille en plastique (2) dans la zone de son appui sur le support (4), le troisième indice de réfraction térahertz (n9) étant inférieur au premier indice de réfraction térahertz (n2),
   mesure de l'intensité (I) d'un rayonnement térahertz (3b) réfléchi par la face supérieure (2a) de la feuille en plastique,
   détermination de l'épaisseur de couche (d) de la feuille en plastique (2) à partir de l'intensité mesurée du rayonnement térahertz (3b) réfléchi,
   **caractérisé en ce que**
   le rayonnement térahertz réfléchi (3b) est mesuré dans une plage de fréquences, dans laquelle les conditions d'interférence suivantes pour l'extinction sont au moins partiellement remplies:

   $$\lambda = 4 \times n_2 \times d \quad (GI2),$$

   λ étant la longueur d'onde du rayonnement térahertz dans l'air, $n_2$ étant l'indice de réfraction de la feuille en plastique et d étant l'épaisseur de couche de la feuille en plastique (2) et le support étant un rouleau tournant (4) ou un tambour, sur la face supérieure (4a) duquel la feuille en plastique (2) est guidée.

2. Procédé suivant la revendication 1, **caractérisé en ce que** l'exposition au rayonnement térahertz (3a) a lieu dans une zone de la feuille en plastique (2), dans laquelle la feuille en plastique (2) est en appui direct et sans inclusions de gaz sur le support (4).

3. Procédé suivant une des revendications précédentes, **caractérisé en ce que** la feuille en plastique (2) est tendue sur le support (4) pour éviter des inclusions de gaz, par exemple sur un rouleau tendeur avant (5a) et un rouleau tendeur arrière (5b).

4. Procédé suivant une des revendications précédentes, **caractérisé en ce que** l'émission du rayonnement térahertz (3) a lieu sur plusieurs fréquences (f), par exemple dans une plage de fréquences, et l'épaisseur de couche (d) de la feuille en plastique (2) est déterminée par une comparaison des intensités (I) du rayonnement térahertz réfléchi (3b) sur plusieurs fréquences, en particulier par une mesure et une évaluation dans la plage de fréquences.

5. Procédé suivant une des revendications précédentes, **caractérisé en ce que** l'épaisseur de couche (d) est déterminée comme minimum local de l'intensité (I) du rayonnement térahertz réfléchi (3b).

6. Procédé suivant une des revendications précédentes, **caractérisé en ce que** le rayonnement térahertz réfléchi (3b) est déterminé dans une plage de fréquences de manière qu'une première part de réflexion (3-II) réfléchie par l'air au niveau d'une interface, à savoir sur la face supérieure (2a) de la feuille en plastique (2), s'éteint ou diminue au moins partiellement par interférence avec une deuxième part de réflexion (3-III) réfléchie sur une deuxième interface entre la face inférieure de la feuille en plastique (2) et une face supérieure (4a) du support (4) ou une part de transmission (3-IV) qui suit la deuxième part de réflexion (3-III) lors du passage à travers la face supérieure (2a).

7. Procédé suivant une des revendications précédentes, **caractérisé en ce que** l'émission de rayonnement térahertz (3a) a lieu de manière sensiblement perpendiculaire vers la feuille en plastique (2) et le support (4).

8. Procédé suivant une des revendications précédentes, **caractérisé en ce que** l'émission d'un rayonnement térahertz (3a) a lieu dans une plage de fréquence de 0,01 THz à 50 THz, en particulier de 0,01 THz à 20 THz, par exemple 0,01 THz à 10 THz, en particulier sous la forme d'un rayonnement pulsé.

9. Procédé suivant une des revendications précédentes, **caractérisé en ce que** la feuille en plastique (2) est mesurée directement après une fabrication, par exemple une extrusion.

10. Dispositif de mesure (1) destiné à la détermination d'une couche d'épaisseur (d) d'une feuille en plastique (2), le dispositif de mesure (1) présentant au moins :

    un support (4) pour guider la feuille en plastique (2),
    un dispositif d'émission et de réception térahertz (6) avec un émetteur térahertz (7) pour émettre un rayonnement térahertz (3) vers la feuille en plastique (2) dans la zone de son appui sur le support (4) et un récepteur térahertz (8) pour recevoir un rayonnement térahertz réfléchi (3b) par la feuille en plastique, et

un dispositif d'évaluation (10) qui évalue l'intensité (I) du rayonnement térahertz réfléchi (3b) et détermine l'épaisseur de couche (d), le support (4) présentant dans la plage de fréquences térahertz (F) un deuxième indice de réfraction térahertz supérieur au premier indice de réfraction térahertz (n2) de la feuille en plastique (2), **caractérisé en ce que**

le dispositif de mesure (1) est conçu pour mesurer le rayonnement térahertz réfléchi (3b) dans une plage de fréquences, dans laquelle les conditions d'interférence pour l'extinction sont remplies au moins en partie :

$$\lambda = 4 \times n2 \times d \quad (GI2),$$

$\lambda$ étant la longueur d'onde du rayonnement térahertz dans l'air, $n_2$ étant l'indice de réfraction de la feuille en plastique et d étant l'épaisseur de couche de la feuille en plastique (2),

et

le support (4) étant un rouleau tournant (4) ou un tambour pour le guidage la feuille en plastique (2).

11. Dispositif de mesure (1) suivant la revendication 10, **caractérisé en ce que** le rouleau tournant (4) ou le tambour est prévu pour le guidage de la feuille en plastique (2) sans inclusion d'air, un dispositif de tension (5a, 5b) servant à tendre la feuille plastique (2) sur le support (4) étant prévu.

12. Dispositif de mesure (1) suivant la revendication 11, **caractérisé en ce que** le dispositif de tension (5a, (5b) présente deux rouleaux tendeurs (5a, 5b).

13. Dispositif de mesure (1) suivant une des revendications 10 à 12, **caractérisé en ce que** l'émetteur térahertz (7), par exemple une antenne émettrice, émet le rayonnement térahertz (3) sur plusieurs fréquences (f), par exemple dans une plage de fréquences, et le dispositif d'évaluation (10) détermine l'épaisseur de couche (d) par une comparaison à différentes fréquences (f), par exemple sous la forme d'un minimum local de l'intensité (I).

**Fig. 1**

$$n_4 > n_2 > n_9$$

**Fig. 2**

EP 3 427 004 B1

$$n_9 \quad < \quad n_2 \quad > \quad n_9$$

Fig. 3

$$n_9 \quad < \quad n_2 \quad < \quad n_4$$

Fig. 4

11

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2899497 A1

**In der Beschreibung aufgeführte Nicht-Patentliteratur**

- Multilayer Thickness Determination Using Continuous Wave THz Spectroscopy. **STANZE DENNIS et al.** IEEE TRANSACTIONS ON TERAHERTZ SCIENCE AND TECHNOLOGY. IEEE, 06. November 2014, vol. 4, 696-701

- **M. THEUER et al.** Sensitivity increase for coating thickness determination using THz waveguides. *OPTICS EXPRESS,* 14. Mai 2010, vol. 18 (11), 11456-11463